# EUROPEAN PATENT SPECIFICATION

(11) **EP 1 243 151 B1**
(45) Date of publication and mention of the grant of the patent: **04.05.2005**
(21) Application number: 00970381.0
(22) Date of filing: 29.09.2000
(51) Int. Cl.: H04Q 7/38

(54) **METHOD AND SYSTEM FOR ASSISTING MOBILE TELECOMMUNICATION TERMINAL USERS**
VETRFAHREN UND SYSTEM ZUR UNTERSTÜTZUNG VON NUTZERN EINES MOBILEN TELEKOMMUNIKATIONSENDGERÄTES
PROCEDE ET SYSTEME PERMETTANT D'AIDER DES UTILISATEURS DE TERMINAUX DE TELECOMMUNICATIONS MOBILES

(30) Priority: 05.10.1999 SE 9903571
(43) Date of publication of application: 25.09.2002
(73) Proprietor: Ontego AB, 112 50 Stockholm (SE)
(72) Inventor: LJUNGBERG, Johan, 103 87 Stockholm (SE)
(86) International application number: PCT/SE2000/001886
(87) International publication number: WO 2001/026408

(56) References cited:
- WO-A2-98/27778
- US-A- 5 583 917
- US-A- 5 898 680

## Description

### Field of the invention

The present invention generally relates to telecommunications, and specifically to a method, and a corresponding system, for assisting mobile telecommunication terminal users to establish contact.

### Background of the invention

In mobile telecommunications there are means for different mobile telecommunication terminal users to communicate with each other. In order to communicate with another mobile telecommunication terminal user, a mobile telecommunication terminal user needs to establish a mobile telecommunication channel over which the communication can be performed. In known systems for mobile telecommunication, such as GSM, TDMA, CDMA, etc. these telecommunication channels are initiated by one mobile telecommunication terminal user by dialling the mobile telephone number of another mobile telecommunication terminal user. Thus, for a mobile telecommunication terminal user to be able to communicate with another mobile telecommunication terminal user he or she needs to know the mobile telephone number of the other mobile telecommunication terminal user. This is a problem when a mobile telecommunication terminal user wants to get in contact with someone that he or she does not know the mobile phone number of. This situation may arise in several different situations, such as when a mobile telecommunication terminal user wants to get in contact with someone who is located within some distance from him or her and who has some particular physical attributes, personality traits, interests etc. and whose telephone number he or she does not know. Examples of personality traits could be a skill that mobile telecommunication terminal user is in need of, such a doctor, mechanic etc.

In WO 98/27778 a method and system for displaying greetings in a mobile radio communications system is disclosed. In the system local zone profile information is transmitted from base stations to mobile terminals located in those service zones. Each mobile terminal has stored subscriber zone information for which that mobile terminal can receive location based services. The mobile terminal also stores an associated greeting for each zone of the subscriber zone profile information. The mobile terminal compares transmitted local zone information with the list of stored subscriber zone profile information, and when a match is found, the mobile terminal displays the greeting associated with the subscriber zone profile information.

### Summary of the Invention

An objective of the present invention is to alleviate the above-mentioned problem of known mobile telecommunication systems, where a mobile telecommunication terminal user is not able to establish telecommunication channels from his or her mobile telecommunication terminal to another user's mobile telecommunication terminal unless he or she knows the mobile telephone number of the other user's mobile telecommunication terminal.

The invention is based on the recognition that sometimes a first mobile telecommunication terminal user does not want to get in contact with specific second mobile telecommunication terminal user, but with a second mobile telecommunication terminal user that has a specific profile and that is located within a specific distance from the first mobile telecommunication terminal user. This is done by combining elements in known mobile communication systems inventively in combination with a matching system that is operatively connected to these known elements.

According to one aspect of the invention a method for assisting mobile telecommunication terminal users to establish contact is provided. According to the method profiles of mobile telecommunication terminal users are stored in a database and the mobile telecommunication terminal users are linked to particular mobile telecommunication terminals. Furthermore the relative distances between the mobile telecommunication terminals are determined and different mobile telecommunication terminal users are matched with each other, based on the profiles of the mobile telecommunication terminal users and the relative distances between the mobile telecommunication terminals to which the mobile telecommunication terminal users are linked. If a match is made the matching mobile telecommunication terminal users are alerted.

Thus, according to the method a mobile telecommunication terminal user is alerted when someone who has some particular physical attributes, personality traits, interests etc that he or she is looking for is located within a certain distance from him or her. If, for example, a mobile telecommunication terminal user is in need of someone with special personality traits, such as a mechanic, he or she will be alerted if there is a mechanic within a certain distance. Furthermore, since each mobile telecommunication terminal user is linked to a mobile telecommunication terminal there is enough information to establish a connection between matching mobile telecommunication users.

According to one embodiment of a method according to the invention a request for further information about a mobile telecommunication terminal user with a matching profile from an alerted mobile telecommunication terminal user is received. After receiving this request, instructions of how to proceed are sent to the alerted mobile telecommunication terminal user.

According to another embodiment of a method according to the invention the establishment of a connection between a pair of mobile telecommunication terminal users with matching profiles is enabled. This is done by sending the mobile telecommunication terminal number of one mobile telecommunication terminal users of the pair of mobile telecommunication terminal users to the other mobile telecommunication terminal user of said pair of mobile telecommunication terminal users. An advantage of this embodiment is thus that a mobile telecommunication terminal user does not have to know the mobile telephone number, or any other identification information, in advance of the mobile telecommunication terminal users that have the profile he or she is looking for in order to get in contact with these mobile telecommunication terminal users.

According to another aspect of the invention a system for assisting mobile telecommunication terminal users to establish contact is provided. The Mobile Match system keeps track of profiles and their relative geographical positions, and alerts profile owners when two or more owners of matching profiles are within a given distance. A profile is defined as an information data set belonging to an individual or object. The profile could consist of data related to physical attributes, personality traits, interests, or current situation. Each profile is linked to a mobile device with a unique identification number such as a mobile phone number. Mobile Match uses relative geographical positioning between two or more devices, as opposed to absolute positioning where the true longitude and latitude of a device is identified. Alerted profile owners are given the option to contact or receive further information about matching profiles. A profile owner can choose to reveal its true identity or to stay anonymous.

By using relative distances, systematic errors of absolute positions will not affect the performance of the system and the method according to the invention. If, for example, the mobile telecommunication terminals of two mobile telecommunication terminal users are connected to the same mobile base station and data regarding the absolute position of this mobile station is erroneous, this will not affect the determined relative distance between the two mobile telecommunication terminal users. This is due to the fact that the error will be equal for both of the mobile telecommunication terminal users.

### Brief Description of the Drawings

The invention will now be further elucidated by way of exemplary embodiments described hereinafter with reference to the accompanying drawings, in which:
figure 1 is an elevational view of exemplary positions of mobile telecommunication terminal users whose profiles are stored in a system according to the invention;
figure 2 is a flowchart of an embodiment of the method according to the invention; and
figure 3 is a schematic diagram of an embodiment of a system according to the invention.

### Detailed Description of Preferred Embodiments

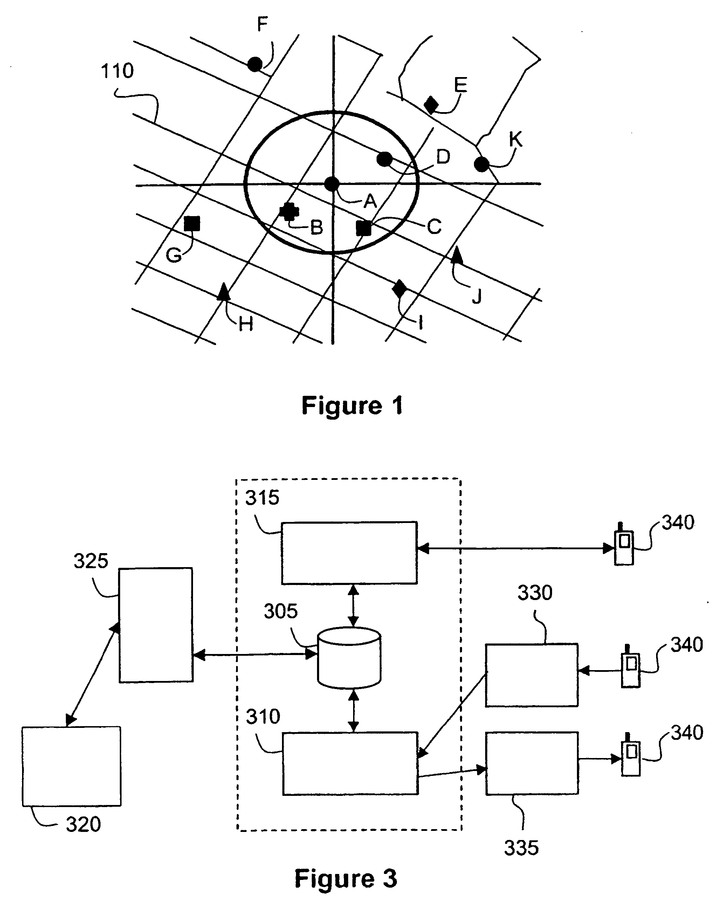

In figure 1, an elevational view of exemplary positions of mobile telecommunication terminal users A-I whose profiles are stored in a system according to the invention, is shown. Furthermore, the positions of the users are indicated in relation to a map of the surroundings of the users, in this case an urban area with streets indicated by the grid mesh 110. The user A wants to get in contact with other users whose profiles matches his or her profile. Furthermore, the user A only wants to get in contact with those users who are within a certain distance from him or her, indicated by the circle around the user A.

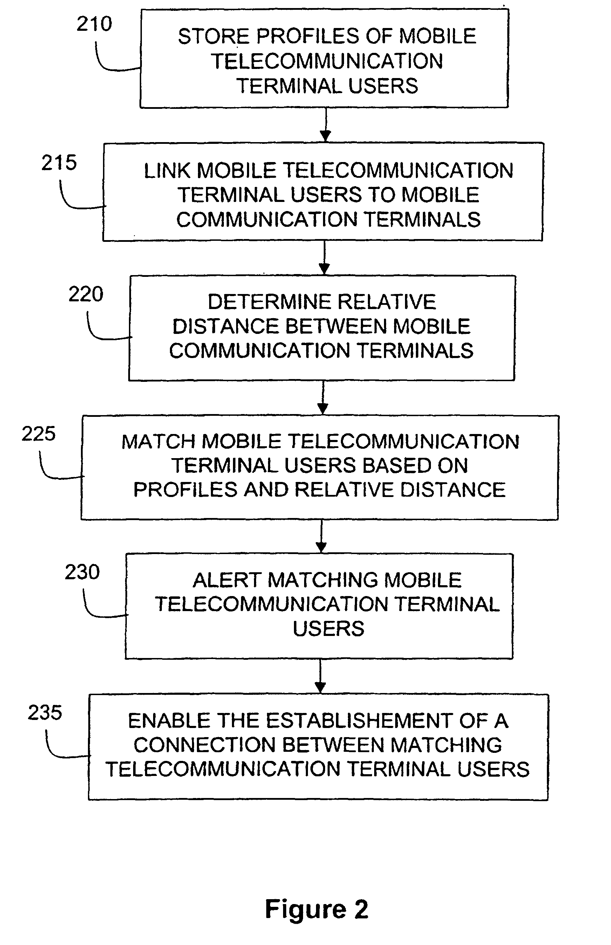

In figure 2, a flowchart of an embodiment of the method according to the invention is shown. In step 210 profiles of mobile telecommunication terminal users are stored in a profile database. The profile may include information regarding physical attributes, personality traits, interests or current situation etc. The personality traits could for example be some skills that mobile telecommunication terminal user is in need of, such a doctor, mechanic etc. In step 215 the mobile telecommunication terminal users are linked to particular mobile telecommunication terminals. Then, the relative distances between the telecommunication terminals are determined in step 220. This is done by sending a request for position data of the mobile telecommunication terminals to a mobile positioning centre (MPC). The position data are then received and the relative distances between the mobile terminals are determined from this position data. The telecommunication terminal users are then matched with each other, based on their profiles and relative distances. Let us say that the mobile telecommunication terminal user A in figure 1 has a profile that indicates that he or she is in need of a mechanic that is located within the distance indicated by the circle around the user A and that the profiles of the mobile telecommunication terminal users D, F and K indicate that they are car mechanics. In this case there would be a match between the mobile telecommunication terminal user A and the mobile telecommunication terminal user D since the mobile communication terminal users F and K are not located within the circle. Note that the determination of the relative distances may be done after profiles have been matched as well. In this case mobile communication terminal users whose profiles match are found first and then the relative distance between these profile is determined in order to determine whether the mobile telecommunication terminals are within the distance that is the second requirement of a match. When a match has been made the matching mobile telecommunication terminal users are alerted of this match in step 230. Finally, in step 235, the establishment of a connection between matching telecommunication terminal users is enabled. An mobile telecommunication terminal users that has been alerted of a match may then contact a interactive voice response system in order to get more information of the matching profiles and/or receive instruction of how to proceed. The alerted mobile telecommunication terminal users may then reveal his or her true identity, e.g. by revealing his or mobile telephone number to a matching telecommunication terminal user. Furthermore, if one of the matching telecommunication terminal user has already reveal his or her mobile telephone number the alerted mobile telecommunication terminal user can establish a connection to this matching telecommunication terminal user by dialling his or her mobile telephone number.

In figure 3, a schematic diagram of an embodiment of a system according to the invention, is shown. The core system components are a profile database 305, a Matchmaker application 310, and an interactive voice response centre 315 (IVRC). The profile database 305 contains information about profile owners and their corresponding data sets. The Matchmaker 310 tracks the relative position of active profiles and alerts profile owners when a match is made. The IVRC 315 receives incoming calls from alerted profile owners that wish to get further information about matching profiles and instructions on how to proceed. Supporting system components are a web-based user interface 320 (browser), a publishing server 325 (e.g. web and wap), a mobile positioning centre 330 (MPC), mobile messaging centre 335 (SMSC), and mobile phones 340 or other mobile communication devices. The web-based user interface 320 is an interactive user interface used to enter and manage profiles. The publishing server 325 is used to publish profiles and tracking status. The MPC 330 receives instructions from the Matchmaker 310 on which mobile phone numbers that should be positioned and returns the positioning data to the Matchmaker 310. The mobile phone messaging centre 335 connects the Matchmaker with mobile phones 340. Alerts are generated by the Matchmaker 310 and are sent out by the SMSC 335. The mobile phone system, or the mobile phone handset itself, generates the positioning data. Mobile phones 340 also used to alert profile owners and for profile owners to contact the IVRC 315

The profile database 305 includes the profiles of profile owners, i.e. mobile telecommunication terminal users. Each mobile telecommunication terminal user is logically linked to his or her mobile telecommunication terminal, such as a mobile telephone. The mobile telecommunication terminal is identified by an unique ID, such as its mobile telephone number. The matchmaker application 310 includes relative distance determining means for sending a request to the MPC 330 for position data of a number of mobile telecommunication terminals, means for receiving said position data from the MPC 330 , and relative distance determining means for determining the relative distance between the number of mobile telecommunication terminals from said position data. The matchmaker application 310 also includes means for matching different mobile telecommunication terminal users with each other. The matching is based on the profiles of the mobile telecommunication terminal users and the relative distance between the mobile telecommunication terminals to which said mobile telecommunication terminal users are linked. Furthermore the matchmaker application 310 generates an alert if there is a match and the alert is sent via the SMSC 335 to the matching mobile telecommunication terminal users. The IVRC 315 is arranged to receive a request for further information about a mobile telecommunication terminal user with a matching profile from an alerted mobile telecommunication terminal user, and to send instructions to the alerted mobile telecommunication terminal user of how to proceed.

## Claims

1. A system for assisting mobile telecommunication terminal users (A-K) to establish contact, comprising:
storage means (305) for storing profiles of mobile telecommunication terminal users; **characterized by**
means (305) for linking mobile telecommunication terminals (340) to particular mobile telecommunication terminal users (A-K);
relative distance determining means (310, 330) for determining relative distances between mobile telecommunication terminals (340);
means (310) for matching different mobile telecommunication terminal users (A-K) with each other based on the profiles of said mobile telecommunication terminal users (A-K) and the relative distances between the mobile telecommunication terminals (340) to which said mobile telecommunication terminal users (A-K) are linked; and
means (310, 335) for alerting the mobile telecommunication terminal users (A-K) for which a match has been made.

2. The system according to claim 1, further comprising:
means (310) for sending a request to a mobile positioning centre (330) for position data of a number of mobile telecommunication terminals (340); and
means (310) for receiving, from said mobile positioning centre (330), said position data of said number of mobile telecommunication terminals (340), and
wherein said relative distance determining means (310, 330) are arranged to determine relative distance between said number of mobile telecommunication terminals (340) from said position data.

3. The system according to claim 1, further comprising:
means (310) for receiving position data from a number of mobile telecommunication terminals (340), and
wherein said relative distance determining means (310, 330) are arranged to determine the relative distance between said number of mobile telecommunication terminals (340) from said position data.

4. The system according to any one of claim 1-3, wherein said matching means (310) are arranged to identify pairs of mobile telecommunication terminal users for which the profile of one of each pair of mobile telecommunication terminal users is a profile that the other of the pair of mobile telecommunication terminal users is looking for, and to determine for each of said pairs of mobile telecommunication terminal users, if the relative distance between the pair of mobile terminals that are linked to the pair of mobile telecommunication terminal users is less than a predetermined distance, that there is a match.

5. The system according to claim 4, further comprising:
means (315) for receiving a request for further information about a mobile telecommunication terminal user with a matching profile from an alerted mobile telecommunication terminal user; and
means (315) for sending instructions to said alerted mobile telecommunication terminal user of how to proceed.

6. The system according to claim 5, wherein said means (315) for sending instructions are arranged to send the mobile telecommunication terminal number of one mobile telecommunication terminal users of said pair of mobile telecommunication terminal users to the other mobile telecommunication terminal user of said pair of mobile telecommunication terminal users.

7. A method for assisting mobile telecommunication terminal users to establish contact, comprising the steps of:
storing (210) profiles of mobile telecommunication terminal users; **characterized by**
linking (215) said mobile telecommunication terminal users to particular mobile telecommunication terminals;
determining (220) relative distances between said mobile telecommunication terminals;
matching (225) different mobile telecommunication terminal users with each other based on the profiles of said mobile telecommunication terminal users and the relative distances between the mobile telecommunication terminals to which said mobile telecommunication terminal users are linked; and
alerting (230) the mobile telecommunication terminal users for which a match has been made.

8. The method according to claim 7, wherein the step of determining comprises the steps of:
sending a request to a mobile positioning centre for position data of a number of mobile telecommunication terminals;
receiving, from said mobile positioning centre, said position data of said number of mobile telecommunication terminals; and
determining the relative distance between said number of mobile telecommunication terminals from said position data.

9. The method according to claim 7, wherein the step of determining comprises the steps of:
receiving position data from a number of mobile telecommunication terminals; and
determining the relative distance between said number of mobile telecommunication terminals from said position data.

10. The method according to any one of claim 7-9, wherein the step of matching comprises the steps of:
identifying pairs of mobile telecommunication terminal users for which the profile of one of each pair of mobile telecommunication terminal users is a profile that the other of the pair of mobile telecommunication terminal users is looking for; and
determining for each of said pairs of mobile telecommunication terminal users, if the relative distance between the pair of mobile terminals that are linked to the pair of mobile telecommunication terminal users is less than a predetermined distance, that there is a match.

11. The method according to claim 10, further comprising the steps of:
receiving a request for further information about a mobile telecommunication terminal user with a matching profile from an alerted mobile telecommunication terminal user; and
sending instructions to said alerted mobile telecommunication terminal user of how to proceed.

12. The method according to claim 11, further comprising the step of:
enabling (235) the establishment of a connection between a pair of mobile telecommunication terminal users with matching profiles by sending the mobile telecommunication terminal number of one mobile telecommunication terminal users of said pair of mobile telecommunication terminal users to the other mobile telecommunication terminal user of said pair of mobile telecommunication terminal users.

13. A computer program comprising computer-executable instructions for performing the steps recited in any of the claims 7-12.

## Patentansprüche

1. Ein System für die Unterstützung der Anwender (A-K) von mobilen Telekommunikations-Terminals zur Herstellung von Kontakten, umfasst:
- die Speichermittel (305) zum Abspeichern von Anwenderprofilen von mobilen Telekommunikations-Terminals; diese sind **gekennzeichnet durch** Mittel (305) zur Verbindung von mobilen Telekommunikations-Terminals (340) zu besonderen Anwendern (A-K) von mobilen Telekommunikations-Terminals;
- die Mittel (310, 330) der relativen Entfernungsermittlung zur Ermittlung der relativen Entfernungen zwischen den mobilen Telekommunikations-Terminals (340);
- die Mittel (310) zur Abstimmung von verschiedenen Anwendern (A-K) von mobilen Telekommunikations-Terminals aufeinander, welche auf den Profilen besagter Anwender (A-K) von mobilen Telekommunikations-Terminals beruhen, und den relativen Entfernungen zwischen den mobilen Telekommunikations-Terminals (340), zu welchen besagte Anwender (A-K) von mobilen Telekommunikations-Terminals verbunden sind;
- und die Mittel (310, 335) zur Benachrichtigung der Anwender (A-K) von mobilen Telekommunikations-Terminals, für welche eine Abstimmung gemacht worden ist.

2. Das System gemäss Behauptung 1, umfasst weiter:
- die Mittel (310) eine Anfrage über Positionsdaten einer Anzahl von mobilen Telekommunikations-Terminals (340) zu einem mobilen Positionszentrum (330) zu senden;
- und die Mittel (310) zum Empfangen von diesen Positionsdaten einer genannten Anzahl von mobilen Telekommunikations-Terminals (340) von besagtem mobilen Positionszentrum (330),
- und worin besagte Mittel zur relativen Entfernungsermittlung geregelt sind, um die relative Entfernung zwischen einer genannten Anzahl von mobilen Telekommunikations-Terminals (340) von besagten Positionsdaten zu ermitteln.

3. Das System gemäss Behauptung 1, umfasst weiter:
- die Mittel (310) zum Empfangen von Positionsdaten einer Anzahl von mobilen Telekommunikations-Terrninals (340),
- und worin besagte Mittel zur relativen Entfernungsermittlung geregelt sind, um die relative Entfernung zwischen einer genannten Anzahl von mobilen Telekommunikations-Terminals (340) von besagten Positionsdaten zu ermitteln.

4. Das System gemäss jeder Behauptung 1-3, worin besagte Mittel zur Abstimmung geregelt sind, um Anwenderpaare von mobilen Telekommunikations-Terminals zu identifizieren, für welche das Abstimmungsprofil von einem von jedem Anwenderpaar von mobilen Telekommunikations-Terminals dieses ist, nach welchem der andere von diesem Anwenderpaar von mobilen Telekommunikations-Terminals sucht, und für jedes von besagten Anwenderpaaren von mobilen Telekommunikations-Terminals ist zu ermitteln, falls die relative Entfernung zwischen einem Paar von mobilen Terminals, welche mit einem Anwenderpaar von mobilen Telekommunikations-Terminals verbunden sind, weniger als die im voraus ermittelte Entfernung ist, gibt es eine Abstimmung.

5. Das System gemäss Behauptung 4, umfasst weiter:
- die Mittel (315) zum Empfangen einer Anfrage für weitere Informationen über einen Anwender von mobilen Telekommunikations-Terminals mit einem Abstimmungsprofil von einem benachrichtigten Anwender von mobilen Tetekommunikations-Terminals;
- und die Mittel (315) zum Senden von Anweisungen zu besagtem Anwender von mobilen Telekommunikations-Terminals darüber wie fortzufahren ist.

6. Das System gemäss Behauptung 5, worin besagte Mittel (315) zum Senden von Anweisungen geregelt sind, um die Nummerdes mobilen Telekommunikations-Terminals von einem Anwender von mobilen Telekommunikations-Terminals von besagtem Anwenderpaar von mobilen Telekommunikations-Tenninals zu dem anderen Anwender von mobilen Telekommunikations-Terminals von besagtem Anwenderpaar von mobilen Telekommunikations-Terminals zu senden.

7. Eine Methode für die Unterstützung der Anwender von mobilen Telekommunikations-Terminals zur Herstellung von Kontakten, umfasst die folgenden Schritte:
- Speichern (210) der Anwenderprofile von mobilen Telekommunikations-Terminals; diese sind **gekennzeichnet durch** das Verbinden (215) genannter Anwender von mobilen Telekommunikations-Terminals zu besonderen mobilen Telekommunikations-Terminals;
- Ermitteln (220) der relativen Entfernungen zwischen besagten mobilen Telekommunikations-Terminals;
- Abstimmen (225) der verschiedenen Anwender von mobilen Telekommunikations-Terminals aufeinander, welche auf den Profilen besagter Anwender von mobilen Telekommunikations-Terminals beruhen, und den relativen Entfernungen zwischen den mobilen Telekommunikations-Terminals, zu welchen besagte Anwender von mobilen Telekommunikations-Terminals verbunden sind;
- und Benachrichtigen (220) der Anwender von mobilen Telekommunikations-Terminals, für welche eine Abstimmung gemacht worden ist.

8. Die Methode gemäß Behauptung 7, worin der Errnittlungsschritt enthalten ist, umfasst die Schritte:
- Senden einer Anfrage zu einem mobilen Positionszentrum für Positionsdaten von einer Anzahl von mobilen Telekommunikations-Terminals;
- Empfangen von besagten Positionsdaten einer bekannten Anzahl von mobilen Telekommunikations-Terminals von besagtem mobilen Positionszentrum;
- und Ermitteln der relativen Entfernung zwischen besagter Anzahl von mobilen Telekommunikations-Terminals von besagten Positionsdaten.

9. Die Methode gemäß Behauptung 7, worin der Ermittlungsschritt enthalten ist, umfasst die Schritte:
- Empfangen von Positionsdaten von einer Anzahl von mobilen Telekommunikations-Terminals;
- und Ermitteln der relativen Entfernung zwischen besagter Anzahl von mobilen Telekommunikations-Terminals von besagten Positionsdaten.

10. Die Methode gemäss jeder Behauptung 7-9, worin der Abstimmungsschritt enthalten ist, umfasst die Schritte:
- Identifizieren von Anwenderpaaren von mobilen Telekommunikations-Terminals, für welche das Abstimmungsprofil von einem von jedem Anwenderpaar von mobilen Teiekommunikations-Terminals dieses ist, nach welchem der andere von diesem Anwenderpaar von mobilen Telekommunikations-Terminals sucht;
- und Ermitteln für jedes von besagten Anwenderpaaren von mobilen Telekommunikations-Terminals, falls die relative Entfernung zwischen einem Paar von mobilen Terminals, welche mit einem Anwenderpaar von mobilen Telekommunikations-Terminals verbunden sind, weniger als die im voraus ermittelte Entfernung ist, gibt es eine Abstimmung.

11. Die Methode gemäss Behauptung 10, umfasst weiter die Schritte:
- Empfangen einer Anfrage für weitere Informationen über einen Anwender von mobilen Telekommunikations-Terminals mit einem Abstimmungsprofil von einem benachrichtigten Anwender von mobilen Telekommunikations-Terminals;
- und Senden von Anweisungen zu besagtem benachrichtigten Anwender von mobilen Telekommunikations-Terminals darüber wie fortzufahren ist.

12. Die Methode gemäss Behauptung 11, umfasst weiter den Schritt:
- Ermöglichen (235) der Bildung von einer Verbindung zwischen einem Anwenderpaar von mobilen Telekommunikations-Terminals mit übereinstimmenden Abstimmungsprofilen durch Senden der Nummer des mobilen Telekommunikations-Terminals eines der Anwender von mobilen Telekommunikations-Terminals besagten Anwenderpaares zum anderen Anwender von mobilen Telekommunikations-Terminals besagten Anwenderpaares.

13. Ein Computerprogramm enthält Computer-ausführbare Anweisungen zum Durchführen der genannten Schritte in jeder Behauptung 7-12.

## Revendications

1. Un système pour aider les utilisateurs de terminaux de télécommunication mobile (A-K) à entrer en contact, comprenant la mise en oeuvre des moyens suivants:
- Les moyens de stocker (305) les profils des utilisateurs de terminaux de télécommunication mobile.
- Les moyens de lier (305) les terminaux de télécommunication mobile aux utilisateurs de terminaux particuliers de télécommunication mobile (A-K).
- Les moyens de déterminer (310, 330) les distances relatives entre les terminaux de télécommunication mobile (340).
- Les moyens d'apparier (310) les différents utilisateurs de terminaux de télécommunication mobile (A-K) les uns avec les autres, appariement basé sur les profils des utilisateurs de terminaux de télécommunication mobile (A-K) et les distances relatives entre les terminaux de télécommunication mobile (340) à travers lesquels lesdits utilisateurs de terminaux de télécommunication mobile (A-K) sont reliés.
- Les moyens d'alerter (310, 335) les utilisateurs de terminaux de télécommunication mobile (A-K) pour lesquels un appariement a été effectué.

2. Le système selon la revendication 1, comprend en outre:
- Les moyens d'envoyer (310) une demande à un centre de positionnement mobile (330) pour l'envoi des données de position d'un certain nombre de terminaux de télécommunication mobile (340).
- Les moyens de recevoir (310) dudit centre de positionnement mobile (330) lesdites données de position des terminaux de télécommunication mobile (340) là où lesdits moyens de déterminer (310, 330) la dite distance relative sont disposés pour déterminer la distance relative entre lesdits terminaux de télécommunication mobile (340) à partir desdites données de position.

3. Le système selon la revendication 1, comprend en outre les moyens de recevoir (310) des données de position d'un certain nombre de terminaux de télécommunication mobile (340), et dans lesquels lesdits moyens de déterminer (310, 330) la distance relative sont disposés pour déterminer la distance relative entre lesdits terminaux de télécommunication mobile (340) à partir desdites données de position.

4. Le système selon la revendication 1, 2 ou 3 dans lequel lesdits moyens d'appariement (310) sont mis en place pour :
- identifier les paires d'utilisateurs de terminaux de télécommunication mobile pour lesquels le profil de l'un des utilisateurs de la paire correspond au profil que l'autre utilisateur de terminaux de télécommunication mobile de la paire recherche.
- déterminer pour chacune desdites paires d'utilisateurs de terminaux de télécommunication mobile si la distance relative entre la paire de terminaux mobiles qui sont liés à la paire d'utilisateurs de terminaux de télécommunication mobile est inférieure à une distance prédéterminée, lorsqu'il y a un appariement.

5. Le système selon la revendication 4, comprend en outre:
- Les moyens de recevoir (315) d'un utilisateur de terminaux de télécommunication mobile qui a été alerté, une demande de renseignements complémentaires sur un utilisateur de terminaux de télécommunication mobile au profil assorti.
- Les moyens d'envoyer (315) au dit utilisateur de terminaux de télécommunication mobile alerté, des instructions sur la façon de procéder.

6. Le système selon la revendication 5, dans lequel lesdits moyens d'envoyer (315) des instructions sont mis en place pour envoyer le numéro de téléphone d'un terminal de télécommunication mobile de l'un des utilisateurs de terminaux de télécommunication mobile de ladite paire d'utilisateurs de terminaux de télécommunication mobile à l'autre utilisateur de ladite paire d'utilisateurs de terminaux de télécommunication mobile.

7. Une méthode pour assister les utilisateurs de terminaux de télécommunication mobile à entrer en contact, comprend les étapes suivantes :
- Le stockage (210) des profils des utilisateurs de terminaux de télécommunication mobile.
- La liaison (215) desdits utilisateurs de terminaux de télécommunication mobile à de particuliers terminaux de télécommunication mobile.
- La détermination (220) des distances relatives entre les terminaux de télécommunication mobile.
- L'appariement (225) des différents utilisateurs de terminaux de télécommunication mobile les uns avec les autres, appariement basé sur les profils des dits utilisateurs de terminaux de télécommunication mobile et les distances relatives entre les différents terminaux de télécommunication auxquels les utilisateurs de terminaux de télécommunication mobile sont reliés.
- L'alerte (230) des utilisateurs de terminaux de télécommunication mobile pour lesquels un appariement a été effectué.

8. La méthode selon la revendication 7, dans laquelle l'étape de la détermination comprend les étapes suivantes
- L'envoi d'une demande à un centre de positionnement mobile pour l'obtention des données de position d'un certain nombre de terminaux de télécommunication mobile.
- La réception de la part dudit centre de positionnement, desdites données de position sur lesdits terminaux de télécommunication mobile.
- La détermination à partir desdites données de position, des distances relatives entre lesdits terminaux de télécommunication mobile.

9. La méthode selon la revendication 7, dans laquelle l'étape de la détermination comprend les étapes suivantes :
- La réception des données de position à partir d'un certain nombre de terminaux de télécommunication mobile.
- La détermination à partir des données de position, des distances relatives entre lesdits terminaux de télécommunication mobile.

10. La méthode selon la revendication 7, 8 ou 9, dans laquelle l'étape de l'appariement comprend les étapes suivantes :
- L'identification des paires d'utilisateurs de terminaux de télécommunication mobile pour lesquels le profil de l'une des personnes de la paire d'utilisateurs de terminaux de télécommunication correspond au profil que l'autre personne de la paire d'utilisateurs de terminaux de télécommunication mobile recherche.
- La détermination pour chacune desdites paires d'utilisateurs de terminaux de télécommunication mobile, que si la distance relative entre la paire de terminaux mobiles qui sont reliés à la paire d'utilisateurs de terminaux de télécommunication mobile est inférieure à la distance qui a été prédéterminée,il y a appariement.

11. La méthode selon la revendication 10, comprend en outre les étapes suivantes :
- La réception de la part d'un utilisateur de terminaux de télécommunication mobile qui a été alerté, d'une demande de renseignements complémentaires sur l'utilisateur de terminaux de télécommunication mobile avec un profil assorti.
- L'envoi au dit utilisateur de terminaux de télécommunication mobile qui a été alerté, des instructions sur la façon de procéder.

12. La méthode selon la revendication 11, comprend en outre l'étape suivante : permettre l'établissement d'une connexion entre une paire d'utilisateurs de terminaux de télécommunication mobile ayant des profils assortis, par l'envoi du numéro de téléphone de l'un des utilisateurs de terminaux de télécommunication mobile de ladite paire à l'autre utilisateur de terminaux de télécommunication mobile de ladite paire d'utilisateurs de terminaux de télécommunication mobile.

13. Un logiciel comprenant des fichiers de programme pour l'accomplissement des étapes énumérées dans chacune des revendications 7, 8, 9, 10, 11, 12.
